# EUROPEAN PATENT SPECIFICATION

(11) **EP 0 882 968 B1**
(45) Date of publication and mention of the grant of the patent: **06.02.2002**
(21) Application number: 98117404.8
(22) Date of filing: 14.10.1994
(51) Int. Cl.: G01M 3/32

(54) **Leak testing with abutment surface and mechanical bias**
Leckerfassung mit Stützfläche und mechanischer Vorspannung
Essai d'étanchéité avec surface soutenante et précontrainte mécanique

(30) Priority: 18.11.1993 US 154079
(43) Date of publication of application: 09.12.1998
(62) Divisional of application: 94116207.5
(73) Proprietor: Lehmann, Martin, CH-5610 Wohlen 1 (CH)
(72) Inventor: Lehmann, Martin, CH-5610 Wohlen 1 (CH)
(74) Representative: Troesch Scheidegger Werner AG

(56) References cited:
- FR-A- 2 180 123
- US-A- 3 027 753
- US-A- 3 813 923

## Description

The present invention relates to a method of leak testing a container, to a test chamber therefor and corresponding uses. More particularly, the present invention is for reducing test cycle time and for improving the measuring accuracy.

Methods for leak testing of containers are known in which a pressure difference is applied between the interior and the exterior of a container to be tested as an initial value for latter measuring. Afterwards, a pressure value, which is dependent on the pressure difference installed as the initial value and on leakage conditions of the container to be tested, is measured, as a leak indication.

From the article "Lecksuche mittels Differenzdruckmessungen" by J.T Furness, VFI 4/78, it is generally known to test a container on leakage by monitoring its internal or its external pressure. Thereby, it is described that, the smaller that a volume is selected, wherein the time course of pressure is monitored, the more accurate such a measuring will become.

There exists a clear need for shortening the time span necessitated for a test cycle of a container and of improving the accuracy of such tests to be able to detect smallest leakages of such containers.

A method and test chamber for leak testing a container with a substantially flexible wall portion disclosed in applicants' earlier U.S. Patent No. 5 042 291 offer a solution to the aforementioned need wherein the container is introduced into a test cavity, so that the wall portion of the container is spaced from an inner adjacent wall portion of the test cavity with a gap being defined between the wall portion of the cavity and the flexible wall portion of the container. A pressure difference is installed as an initial value between the interior of the container and the gap by applying a pressure at least to the gap which is smaller than a pressure inside the container. The flexible wall portion of the container is supported from its exterior side within the test cavity using a grid or a mesh structured inlay to prevent the flexible wall portion from bending outwardly into contact with the wall portion of the test cavity as a result of the pressure difference. The time course of a pressure prevailing within the gap is measured as a leak indicative signal. A drawback of this technique is, that provision of a mesh or a grid necessitate a separate part which is critical with respect to its form stability, necessitates separate cleaning from time to time and may stick on the container and may be removed therewith out of the test cavity. Furthermore in FR-A-2 180 123 a direct pressing of a container is indicated.

The present invention is as set out the claims 1 or 3.

The container is mechanically stressed during testing in that a biasing member is pushed from the cavity on a further flexible wall portion of the container. Thereby, mechanical biasing occurs at a flexible wall portion of the container, which is different from the flexible wall portion supported for preventing outwards bending or mechanical biasing may be performed at the same flexible wall portion, which is also supported by the inventive projection. The mechanical biasing is installed by closing the cavity with the container therein.

The container may have at least two flexible wall portions wich are linked along a distinct link-area. By the said biasing technique it becomes possible to specifically stress that link-area as a container portion which is critical with respect to leakage.

The inventive technique is especially suited for testing flexible prefilled containers as yoghurt-containers, pouder-containers or so called blisters, so for instance for coffee-pouder, tea, medicament-pouder and so on.

It must be pointed out that provision of a prior art mesh for preventing outwards bending of flexible wall portions of the container and, additionally, provision of mechanical biasing of a separate wall portion of the container to mechanically stress an area of the container disposed between the first and the second flexible wall portions is considered inventive. By such combination, on the one hand, in spite of mechanical biasing, it is preventing, that a flexible wall portion bends outwards under test conditions, and, on the other hand, a specific area of the container is mechanically loaded in a way, which would, without prevention of outwards bending, expand the container so that its wall would be pressed against the cavity wall.

The invention will be more specifically understood when the following detail description is considered in conjunction with the accompanying drawings in which:
Fig. 1 shows schematically in a cross-sectional representation a prior art embodiment of a test chamber for leak testing of cup shaped containers as of yoghurt cups,
Fig. 2 (not claimed) shows a schematic, cross-sectional view of a first embodiment of a test chamber,
Fig. 3 (not claimed) is a schematic cross-sectional view of the test chamber of Fig. 2 taken along the line VIII-VIII, the container of Fig. 2 not being shown, so that a distinct pattern of longitudinally extending, intersecting horizontal and vertical channels can be seen.
Fig. 4 (not claimed) is an enlarged view of a portion of the test chamber wall depicting a roughened surface,
Fig. 5 shows schematically in a cross-sectional representation an inventive test chamber for leak testing of cup-shaped containers such as yoghurt cups, which makes use of prior art supporting mesh according to Fig. 1.

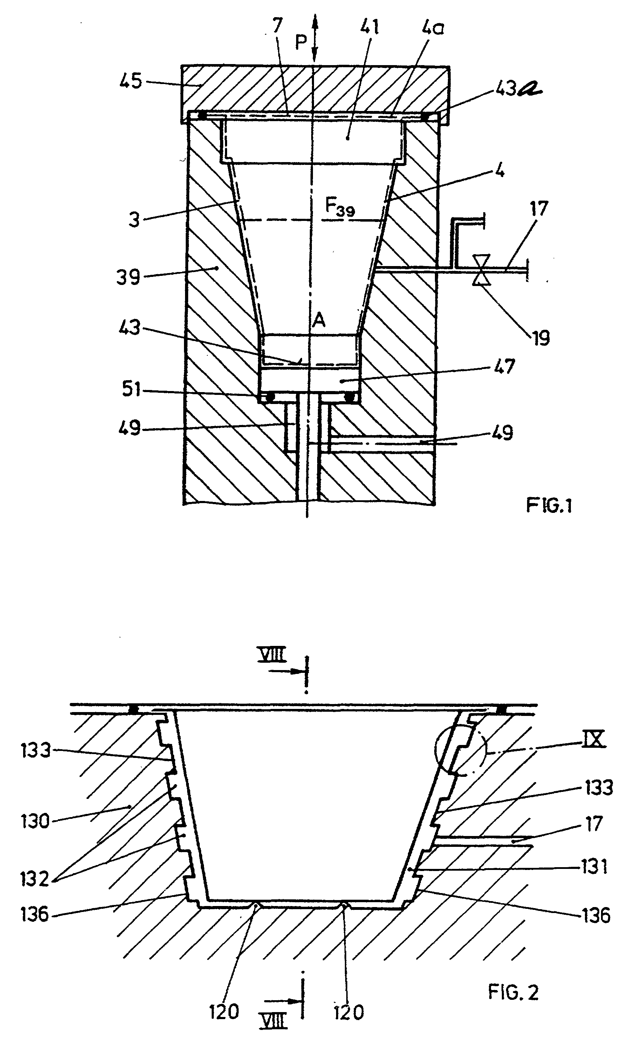

In Fig. 1, there is schematically shown a prior art test chamber. As an example, it is constructed for testing closed containers 3 of substantial truncated cone form, as for testing yoghurt cups, with respect to leakage. A container 3 to be tested and with a covering lid 7 7 is shown in dashed lines. The test chamber comprises a receptacle 39 which is formed according to the outside form of the container 3. The cross-sectional area of the receptacle 39, F₃₉ diminishes in direction of the central axis A substantially conelike departing from a receptacle opening 41, towards the bottom 43 of the receptacle 39 and defines a cavity which is substantially similar in the sense of geometric similarity with the container 3, so that, when the container 3 to be tested is introduced, there are defined between its wall and the inside wall of the receptacle 39 substantially constant distances.

Adjacent to the opening 41 of the receptacle 39 there is preferably provided a positioning groove for a collar, which is usually provided at such containers to which collar the covering foil-like lid of the container is welded.

The test chamber further comprises a cover 45 which is movingly driven, as shown by reference P , and is moved towards or from the receptacle 39, so as to either sealingly close it with the help of the seals 43 or to open it.

At the bottom of the receptacle 39 there is provided an axially movable and controllably driven piston 47 which is retracted, when a container 3 to be tested is introduced in the test chamber and during the testing of the container, and which, after opening the cover 45, is driven into the test chamber, so as to eject the tested container 3. The piston 47 comprises an enlarged piston head.

At the bottom of the receptacle 39, adjacent to the piston head, a drain sleeve 49 enters into the test chamber, which is sealingly closed by means of the head of the piston 47 by means of seals 51, once the piston 47 is retracted. Thus, after testing a container 3 which was leaking, so that material contained in the container 3 could possibly penetrate into the test chamber, the test chamber may be rinsed after the piston 47 has been driven into the test chamber 31 to eject the leaking container 3. Thus, the test chamber 31 is rinsed and the rinsing liquid will be drained out of the open drain sleeve 49. For further improving rinsing of the test chamber, there may be provided, as at the cover 45, a rinsing liquid feed line, possibly with a nozzle arrangement, to eject rinsing liquid into the test chamber (not shown).

The test chamber, according to Fig. 1, comprises, as again schematically shown, pressure feed and pressure monitoring means to install a pressure difference from the inside of the container into the space 4 between the wall of container 3 and the wall of the test chamber.

Further and as known and therefore not shown in Fig. 1, monitoring means are provided to monitor the pressure in the space 4 which results from the initial pressure difference value installed across the wall of the container 3 as a function of its tightness or leakness.

For leak testing of containers, as for yoghurt-, cream-, tea-coffee-, medicament- etc. cups, blisters, etc. continuously in line with filling and closing operations for such containers, by which leak testing e. g. every container of the production shall be tested, a multitude of test chambers, one of which having been described with the help of Fig. 1, are normally combined to form a test machine. In such a machine the multitude of test chambers according to Fig. 1 are preferably arranged on a turnably driven carousel table (not shown), so that, in line with filling and closing of the containers, all of them are pressure leak tested before these containers are stored ready for package.

For testing of such containers with a flexible wall or at least wall portion by means of applying under-pressure in space 4, portions of the container walls may be pressed on the inner wall of the test chamber. To prevent this it is known to provide a mesh inlay along and slightly distant from the wall of the test chamber, so e.g. in the form of a cone-shaped mesh inlay which is open at its bottom end and in which the container 3 to be tested is introduced. Such a mesh inlay mechanically stabilizes the wall of the container 3 with respect to outwards bending. Thus, with the help of such a mesh inlay it is prevented that the flexible container wall is bent, so as to tightly reside on the inner wall of the test chamber, when under-pressure is applied in the space 4. Possibly pressure equalizing connections are provided between the lower part of the receptacle 39 and the upper part adjacent to the cover 41 to ensure pressure equalization all around a container 3 to be tested, if a cover of the container tends to sealingly separate the lower part volume of the test chamber from the said upper part volume.

Such connections between lower and upper parts of the test chamber to provide for equalization of the pressure may be provided by appropriate grooves at the cover region of the test chamber, linking the lower part of the space 4 with an upper part 4a thereof.

By the inventive technique, illustrated in Fig. 2, it becomes possible to avoid the prior art mesh or grid, which is applied to test containers according to Fig. 1 (not shown).

Instead of employing a mesh inlay for mechanically stabilizing the flexible wall portion of the container with respect to outward bending as a result of a pressure difference between the inside of the container and the remaining volume of the test cavity as was described, according to the inventive test chamber and method as depicted in Figs. 2 to 4 generally, at least portions of the wall of the test chamber itself are structured to, on the one hand, support the flexible side wall of the container with respect to the outward bending as a result of a reduced pressure within the cavity with respect to pressure within the container, and on the other hand, maintain a spacing between the flexible side wall of the container and at least first, relatively recessed portions of the adjacent wall of the test cavity with a gap being defined between at least the first, relatively recessed portions of the inner wall of the test cavity and the flexible side wall such that a pressure difference can be installed between the interior of the container and at least the gap by applying a pressure at least to the gap, which is smaller than the pressure inside the container. This structure of at least portions of the wall of the test chamber itself may be realized by mechanically machining of channels, bores and so on into the test chamber wall by milling, drilling, eroding, etc. A second and prefered possibility is to increase roughness of the surface of at least preselected areas of the test cavity wall. This may be done by, for example, sand blasting or blasting with glass bullets. The two techniques of mechanically machining and of surface structure roughening may be used individually or may be combined selectively for predetermined test chamber surface areas as in the embodiment of Figs. 2 to 4.

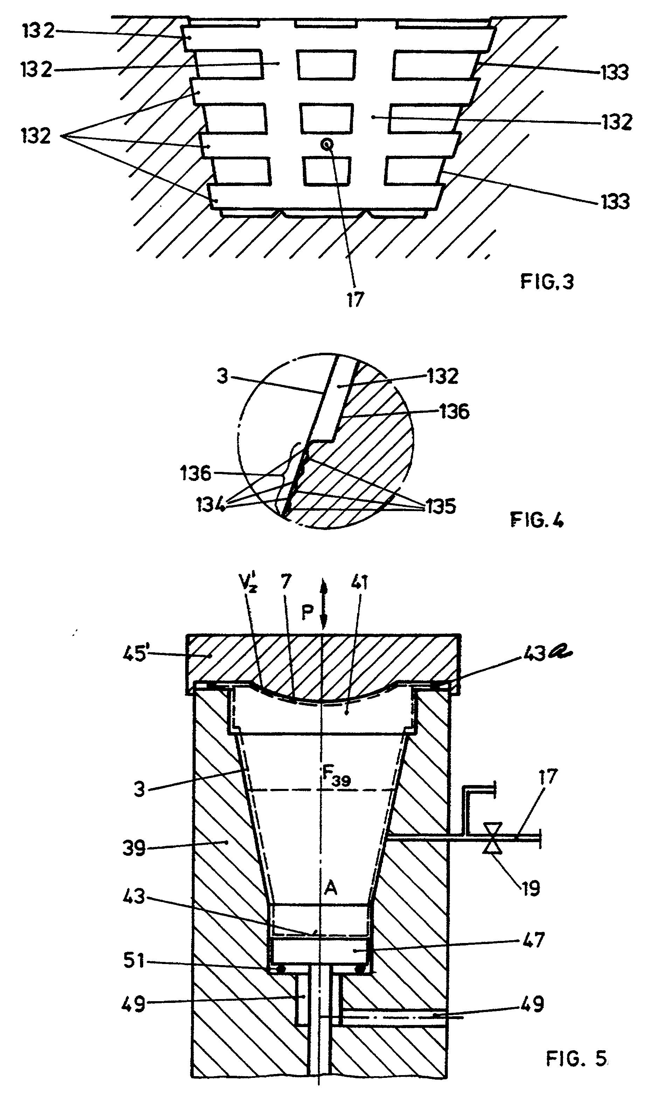

More particularly, in the embodiment of Figs. 2 to 4, there is disclosed a test chamber of the invention which could be used as the test chamber of Fig. 1 or 5. The test chamber of Figs. 2 to 4 comprises a receptacle 130, wherein at least portions of the wall 131 of the receptacle are distinctly structured by machining a plurality of channels 132 therein which extend vertically and horizontally. The channels intersect with one another as seen in Fig. 3. A pressurizing feed line 17 extends from the bottom of one of the channels 132 as shown in Fig. 2. Because the channels intersect with one another, the pressure installed in the test cavity about the container therein is communicated about the container by way of the interconnected channels 132, even though, a flexible side wall of the container may expand outwardly into contact and be supported by relatively raised portions 133 of the wall located between the channels.

The surface of the relatively raised portions 133 or, generally, at least a portion of the cavity or test chamber wall can be roughened as shown in Fig. 4, as by sand blasting or blasting the inner wall of the test cavity with glass bullets to provide relatively raised portions 134 and recessed portions 135 as shown in Fig. 4. With such a roughened surface per se or additionally to a distinct pattern of raised and recessed portions, as shown in Figs. 2 and 3, the flexible side wall of the container can be supported on the high points, that is the relatively raised portions 134, while permitting a pressure difference installed to communicate along relatively recessed roughness-portions 135. The roughening procedure of the test cavity inside wall can be accomplished over the entire wall prior to machining of the channels 132 if such channels are provided. In such a case, relatively recessed portions 136 of the wall 131 formed by the channels 132, e.g. the bottom of the channel 132, need not be roughened as the flexible side wall of the container will be supported outwardly therefrom on raised portions 133 to mechanically stabilize the flexible side wall with respect to further outward bending as a result of an installed pressure difference.

A test chamber and method for leak testing a container according to a still further embodiment of the invention involves reducing the inside volume of the container during testing by mechanically biasing at least a flexible portion of the the container from the outside to the inside, thereby increasing the pressure within the container and applying additional stress to selected areas of the container. In a disclosed form of this embodiment, as illustrated in Fig. 5, the test chamber is like that shown in Fig. 1, except that the cover 45' of the test chamber is formed with a projection in the form of a rounded protrusion which biases the flexible lid of the container 3 inwardly, when the cover 45 sealingly closes the test cavity. Thereby, the inside of the container 3 is additionally pressurized and a critical part of the overall container, namely the lid at its bonded seam, is extremely loaded, so that such area may be tested under a selectively increased stress during the installation of a pressure difference as described above with respect to the other embodiments.

Although not shown in Fig. 5 a supporting mesh or grid is provided as was described, so as to prevent the wall of container 3 to be pressed against the cavity wall, due to the pressure difference installed and, additionally, mechanical biasing by cover 45'. Thereby, an area of the container between a first flexible wall portion being mechanically biased, and a second flexible wall portion being prevented to bend outwards is especially stressed as for instance and especially a link-area of said two container wall portions, which is an especially critical part with respect to leaking. In prefered embodiments, the supporting surfaces are realized, as was described in connection with the Figs. 2 to 4, i.e. by a determined pattern of projecting and recessed portions in the cavity wall and/or by roughness of at least portions of the cavity wall.

## Claims

1. A method of leak testing a container, wherein the container is introduced into a test cavity, so that a first flexible wall portion thereof and an adjacent wall portion of said cavity form an intermediate space, a pressure difference being applied from the inside of said container into said space and a signal depending on said pressure difference being evaluated as a leak indicative signal, wherein outwards bending of said first flexible wall portion is stabilized by at least one, abutment surface in said space and the first or a second flexible wall portion of the container is mechanically biased to the inside of said container.

2. The method of claim 1, wherein said first and second flexible wall portions are linked along a joint which is mechanically stressed by said mechanical biasing.

3. A test chamber for leak testing a container with a first flexible wall portion and a second flexible wall portion comprising a closable test cavity with an inner wall wherein said container can be positioned, at least a portion of said wall of said cavity being arranged so as to be located adjacent and spaced from said first flexible wall portion of said container to form a space between said first flexible wall portion of said container and said wall portion of said cavity, a pressurizing source linked to said cavity to establish a pressure difference from the inside of said container towards said space, wherein at least one abutment surface is located in said space to prevent said first flexible wall portion of said container to bend outwards, and a biasing member (7) is provided to press said first or second flexible wall portion of said container inwardly, once said cavity is closed.

4. The use of the method according to claim 1 or 2, or of the test chamber according to claim 3 for flexible prefilled containers as for yoghurt- or pouder-containers or blisters.

5. The use of the method according to claim 1 or 2 or of the test chamber according to claim 3 for testing containers whereat said first flexible wall portion and said second flexible wall portion are linked along a joint.

## Patentansprüche

1. Verfahren zur Leckprüfung eines Behälters, wobei der Behälter so in einen Prüfhohlraum eingeführt wird, daß ein erster flexibler Wandabschnitt von ihm und ein benachbarter Wandabschnitt des Hohlraums einen Zwischenraum bilden, eine Druckdifferenz vom Inneren des Behälters zum Zwischenraum angelegt wird und ein von der Druckdifferenz abhängiges Signal als Leck-anzeigendes Signal ausgewertet wird, wobei eine Auswölbung des ersten flexiblen Wandabschnitts von mindestens einer Anschlagfläche in dem Zwischenraum stabilisiert wird und der erste oder ein zweiter flexibler Wandabschnitt des Behälters mechanisch zum Inneren des Behälters hin vorbelastet wird.

2. Verfahren nach Anspruch 1, wobei der erste und der zweite flexible Wandabschnitt über eine Verbindung gekoppelt sind, die von der genannten mechanischen Vorbelastung mechanisch belastet wird.

3. Testkammer zur Leckprüfung eines Behälters mit einem ersten flexiblen Wandabschnitt und einem zweiten flexiblen Wandabschnitt, aufweisend: einen schließbaren Prüfhohlraum mit einer Innenwand, worin der Behälter angeordnet werden kann, wobei mindestens ein Abschnitt der Wand des Hohlraums so eingerichtet ist, daß er benachbart mit Abstand vom ersten flexiblen Wandabschnitt des Behälters unter Bildung eines Zwischenraums zwischen dem ersten flexiblen Wandabschnitt des Behälters und dem genannten Wandabschnitt des Hohlraums angeordnet ist, und eine Druckzelle, die mit dem Hohlraum zum Aufbau einer Druckdifferenz vom Inneren des Behälters zu dem Zwischenraum verbunden ist, wobei in dem Zwischenraum mindestens eine Anschlagfläche angeordnet ist, um zu verhindern, daß sich der erste flexible Wandabschnitt des Behälters nach außen biegt, und ein Vorbelastungselement (7) vorgesehen ist, um den ersten oder den zweiten flexiblen Wandabschnitt des Behälters nach innen zu drücken, nachdem der Hohlraum geschlossen worden ist.

4. Verwendung des Verfahrens nach Anspruch 1 oder 2 oder der Prüfkammer nach Anspruch 3, für flexible gefüllte Behälter, wie beispielsweise Yoghurt- oder Pulver-Behälter oder Blister.

5. Verwendung des Verfahrens nach Anspruch 1 oder 2 oder der Prüfkammer nach Anspruch 3 zum Prüfen von Behältern, wobei der erste flexible Wandabschnitt und der zweite flexible Wandabschnitt entlang einer Verbindung gekoppelt sind.

## Revendications

1. Procédé pour tester l'étanchéité d'un récipient, dans lequel le récipient est introduit dans une cavité de test, de façon qu'une première partie de paroi flexible de celui-ci et une partie de paroi adjacente de ladite cavité définissent un espace intermédiaire, une différence de pression étant appliquée depuis l'intérieur dudit récipient dans ledit espace et un signal fonction de ladite différence de pression étant interprété comme un signal indicatif d'une fuite, et dans lequel une flexion vers l'extérieur de ladite première partie de paroi flexible est stabilisée grâce à au moins une surface de butée prévue dans ledit espace, et la première ou une seconde partie de paroi flexible du récipient est sollicitée mécaniquement vers l'intérieur dudit récipient.

2. Procédé selon la revendication 1, dans lequel lesdites première et seconde parties de parois flexibles sont reliées le long d'un joint soumis à une contrainte mécanique par ladite sollicitation mécanique.

3. Chambre de test pour tester l'étanchéité d'un récipient comportant une première partie de paroi flexible et une seconde partie de paroi flexible, comprenant une cavité de test apte à être fermée qui possède une paroi intérieure et dans laquelle ledit récipient peut être positionné, une partie au moins de ladite paroi de ladite cavité étant conçue pour être située à proximité de ladite première partie de paroi flexible dudit récipient tout en étant espacée de celle-ci pour définir un espace entre ladite première partie de paroi flexible dudit récipient et ladite partie de paroi de ladite cavité, et une source de pressurisation reliée à ladite cavité pour établir une différence de pression depuis l'intérieur dudit récipient vers ledit espace, dans laquelle il est prévu au moins une surface de butée située dans ledit espace pour empêcher ladite première partie de paroi flexible dudit récipient de fléchir vers l'extérieur, et un organe de sollicitation (7) pour presser ladite première ou seconde partie de paroi flexible dudit récipient vers l'intérieur, une fois que ladite cavité a été fermée.

4. Mise en oeuvre du procédé selon la revendication 1 ou 2, ou de la chambre de test selon la revendication 3 pour des récipients flexibles préalablement remplis, tels que des pots de yaourt ou de poudre ou des blisters.

5. Mise en oeuvre du procédé selon la revendication 1 ou 2, ou de la chambre de test selon la revendication 3 pour tester des récipients dans lesquels ladite première partie de paroi flexible et ladite seconde partie de paroi flexible sont reliées le long d'un joint.
